# EUROPEAN PATENT SPECIFICATION

(11) **EP 1 094 956 B1**
(45) Date of publication and mention of the grant of the patent: **27.11.2002**
(21) Application number: 98933224.2
(22) Date of filing: 07.07.1998
(51) Int. Cl.: B60C 17/00, B60C 9/18, B60C 9/22, B29D 30/08

(54) **RUNFLAT TIRE HAVING A FABRIC UNDERLAY FOR IMPROVING TREAD CIRCUMFERENTIAL AND MERIDIONAL RIGIDITY AND METHOD OF CONSTRUCTING**
NOTLAUFREIFEN MIT GEWEBEUNTERLAGE ZUR VERBESSERUNG DER UMFANGS-UND MERIDIONALSTEIFIGKEIT UND VERFAHREN ZUR HERSTELLUNG
PNEU POUR ROULAGE A PLAT AVEC TOILE SOUS-JACENTE VISANT A RENFORCER LA RIGIDITE MERIDIENNE ET CIRCONFERENTIELLE DE LA BANDE DE ROULEMENT ET PROCEDE DE FABRICATION

(43) Date of publication of application: 02.05.2001
(73) Proprietor: THE GOODYEAR TIRE & RUBBER COMPANY, Akron, Ohio 44316-0001 (US)
(72) Inventor: ROESGEN, Alain, Emile, François, L-2175 Luxembourg (LU)
(74) Representative: Leitz, Paul
(86) International application number: US9814054
(87) International publication number: WO00001544

(56) References cited:
- EP-A- 0 605 177
- EP-A- 0 778 164
- WO-A-88/08373
- US-A- 4 111 249
- US-A- 4 262 726
- US-A- 4 269 646

## Description

### TECHNICAL FIELD

The present invention relates to a pneumatic radial ply runflat passenger tire and to a method of constructing such tire, and more particularly, to a radial ply runflat tire whose runflat handling is improved by providing a tensile-stress-bearing fabric layer radially inward of the belt structure such that the stiffness of the ground-contacting portion of the tread is increased.

### BACKGROUND OF THE INVENTION

Various methods have been devised for enabling the safe continued operation of unpressurized or underpressurized passenger car tires with the intent of minimizing further damage to the uninflated tire without simultaneously compromising vehicle handling over a distance from the place where the tire lost its pressure to a place desired by the driver, such as a service station where the tire can be changed. Loss of tire pressure can result from a variety of causes, including puncture by a foreign object such as a nail or other sharp object piercing the pneumatic tire installed on a vehicle.

Pneumatic tires designed for continued operation under conditions of unpressurization or underpressurization are also called runflat tires, as they are capable of being driven in the uninflated condition. The conventional pneumatic tire when operated without inflation collapses upon itself, its sidewalls buckling outward in the region where the tread contacts the ground, when supporting a vehicle load. In general, the term "runflat" means that the tire structure alone has sufficient strength to support the vehicle load when the tire is operated in the uninflated condition such that the sidewall and internal surfaces of the tire do not collapse or buckle onto themselves, i.e., without recourse to incorporation of other internal supporting structures and devices to prevent the tire from collapsing.

One approach to runflat tire design is described in U.S. Pat. No. 4,111,249, entitled the "Banded Tire," in which a hoop or annular band approximately as wide as the tread was placed under the tread. The hoop in combination with the rest of the tire structure could support the vehicle weight in the uninflated condition.

Numerous other methods have been used to achieve workable runflat tire design. Generally, such tires incorporate sidewall constructions that are thicker and/or stiffer, so that the tire's load can be carried by an uninflated tire with minimum adverse effects upon vehicle handling until such reasonable time as the tire can be repaired or replaced. The methods used in sidewall stiffening include the incorporation of circumferentially disposed inserts generally having, in cross-sectional view, a crescent shape. Such inserts are located in the inner peripheral surface of the sidewall portion of the carcass, which is the region in the tire usually having the lowest rigidity. In such runflat tire designs, both sidewalls are thickened in a way that each is approximately uniformly thicker in the region of the sidewall between the bead and the tread. The sidewalls of such tires, when operated in the uninflated condition, experience a net compressive load, though with outer portions of the sidewalls necessarily being in tension due to bending stresses which deflect the sidewalls outward or apart from one another in the regions of the sidewall adjacent to the ground-contacting portion of the tread. Furthermore, due to the large amounts of rubber required to stiffen the sidewall members, heat buildup due to flexure of the sidewalls is a major factor in tire failure especially when the uninflated tire is operated for prolonged periods at high speeds.

A Goodyear patent (U.S. Pat. No. 5,368,082) disclosed the first commercially accepted runflat pneumatic radial ply tire, the Eagle GSC-EMT tire. The 5,368,082 patent teaches the employment of special sidewall inserts to improve stiffness. Approximately six additional pounds of weight per tire was required to support an 800 lb. load in this uninflated tire. This earlier runflat design, although superior to prior attempts at runflat tire design, still imposed a weight penalty that could be offset by the elimination of a spare tire and the tire jack. However, this weight penalty was even more problematic when the engineers attempted to build high-aspect-ratio tires for large luxury touring sedans.

In general, runflat tire design is based on the installation of one or more wedge inserts inside each sidewall flex area. The wedge inserts in each sidewall, in combination with the ply structure, add rigidity to the sidewalls in the absence of air pressure during runflat operation. But while the high resistance to compression deflection of the inserts provides the necessary resistance to the collapse of the uninflated loaded tire, this method has several drawbacks which include increased tire weight and, especially during runflat operation, heat buildup in the wedge insert reinforcements of the sidewalls. Moreover, during runflat operation, bending stresses tend to be transmitted to the portion of the tread that contacts the ground, the result being that the central portions of the tread tend to buckle upwards from the ground, resulting in compromised vehicle handling as well as reduced runflat tread life as compared to treads that are designed to resist such central upward buckling.

The bending stresses that act upon the ground-contacting portion of the tread during runflat operation derive partly from the bending stresses that are placed upon the reinforced sidewall structures and partly from the adjacent non-ground-contacting portion of the tread. In other words, during runflat operation, the tread buckling forces derive from two essentially perpendicularly disposed sources: lateral or meridional bending stresses originating in the reinforced sidewalls, and circumferentially originating bending stresses which are transmitted from the portions of the tread that are immediately adjacent to the ground-contacting portions of the tread.

An example of reducing the effect of the bending stresses during runflat operation is set forth in EP-A-0 778 164, which discloses a tire according to the preamble of claim 1 with run-flat durability that has an auxiliary layer between the carcass and the belt layer. The auxiliary layer includes cords that intersect the central equatorial plane at an angle of 20° and greater than or equal to 30°. The subject-matter of the independent method claim 8 differs from the method known from US-A-4 262 726 in that the underlay is circumferentially wrapped upon an initially blown-up green tire carcass of a non-runflat tire.

### OBJECTS OF THE INVENTION

It is an object of the present invention to provide a runflat radial passenger tire and a method of constructing such tire, the runflat tire and method being as defined in one or more of the appended claims and, as such, having the capability of being constructed to accomplish one or more of the following subsidiary objects.

An object of the present invention is to provide a runflat radial passenger tire having long service life and good high-speed vehicle handling characteristics and satisfactory ride by improving the tire tread's circumferential and meridional bending stiffness and resistance to central upward buckling.

Another object of the present invention is to provide a runflat radial passenger tire having long service life and good high-speed vehicle handling characteristics and satisfactory ride by means of improving the tire tread's circumferential bending stiffness so that during high-speed operation at normal inflation pressure the potential for the formation of standing waves in the tread and adjacent portions of the sidewalls is minimized by damping out or otherwise minimizing the formation of standing waves.

Another object of the present invention is to provide a runflat radial passenger tire having good runflat handling characteristics and a satisfactory runflat ride by means of improving the tire tread's circumferential and meridional bending stiffness and resistance to upward buckling such that during underinflation or uninflation operation the central portion of the tread can resist bending stresses that tend to lift the portions of the tread off the ground, which effect has the potential to adversely influence both runflat vehicle handling and runflat tire life.

Another object of the present invention is to provide a runflat radial passenger tire having good runflat life and runflat handling characteristics by means of improving the tread's circumferential and meridional bending stiffness in a way that distributes the tire tread's load, in the ground-contacting region, to a larger area of the sidewalls, thereby reducing sidewall and tread flexure and concomitant heat buildup in the sidewall structure.

Yet another object of the present invention is to provide a runflat radial passenger tire having good runflat life and runflat handling characteristics by means of improving the tread's circumferential stiffness and resistance to central upward buckling in a way that distributes the stresses and tire load in the region of the ground-contacting portion of the tread to a larger portion of the tire sidewalls so that, during runflat operation, the tire's axis of rotation is maintained farther from the ground, thereby reducing sidewall flexure and concomitant heat buildup in the sidewall juncture.

Still another object of the present invention is to apply the inventive concept to a variety of alternative carcass constructions.

### SUMMARY OF THE INVENTION

The present invention relates to a pneumatic radial ply runflat passenger tire having a tread, a casing with two insert-reinforced sidewalls, two inextensible annular beads, a radial ply structure, a belt structure located radially between the tread and the radial ply structure, and a fabric underlay deployed circumferentially inward of the belt structure and radially outward of the radial ply structure. The fabric underlay is reinforced by circumferentially aligned, high-modulus cords that are oriented more or less parallel to the equatorial plane of the tire. The width of the fabric underlay typically extends laterally beyond the lateral edges of the belt structure. The reinforcing cords of the fabric underlay are made of a high-modulus material. The fabric underlay is located on the tensile side of the neutral bending axis of the combined belt structure, fabric underlay and ply structure. The fabric underlay separates the belt structure and the ply structure so as to increase the circumferential and meridional bending stiffness to the tread and the combined underlying belt structure, fabric underlay and ply structure. The reinforcing cords of the fabric underlay induce compressive stresses in the portion of the belt structure that underlies the flattened ground-contacting portion of the tread during normal inflated operation. The reinforcing cords of the fabric underlay are prestressed in tension during the manufacturing process to stiffen the tread and thereby inhibit the formation of standing waves in the tread during high speed operation under normal inflation pressure. The stiffened tread also resists circumferential buckling during runflat operation. The fabric underlay also separates the belt structure from the ply structure so as to increase both the meridional and circumferential moment of inertia of the combined belt structure, fabric underlay and ply structure underlying the tread, which in effect inhibits meridional and circumferential tread buckling during runflat operation. Furthermore, during runflat operation, the prestressed, circumferentially oriented cords of the fabric underlay distribute the load on the uninflated the tire across large areas of the reinforced sidewalls, thereby causing the tire's axis to remain at a higher altitude above the road during runflat operation. The reinforcing cords of the fabric underlay are oriented at an angle of 0 degrees to 8 degrees, preferably about 0 degrees with respect to the equatorial plane of the tire. The fabric underlay of the present invention might also be used in conjunction with a fabric overlay, and/or with one or more of its radial plies being made of high-modulus, essentially inextensible materials.

During the manufacturing process of the tire of the present invention, the fabric underlay is installed as a helically or circumferentially wound, cord-reinforced ribbon upon an initially blown-up green tire carcass. Subsequent to the application of wrapped fabric overlay, the green tire carcass is blown up to engage the belt structure and the tread to form a completed green tire. The edges of the spirally wound ribbon might overlap during installation, or they can be butt joined, i.e., without overlapping. The reinforcing cords of the helically wound ribbon are oriented at an angle of about 0 degrees to about 5 degrees with respect to the equatorial plane of the blown-up green tire carcass to prestress the reinforcing cords in tension. The completed green tire is then blown up in the curing mold.

In one embodiment of the invention, the pneumatic runflat radial tire is envisioned in which one of the radial plies is reinforced with high-modulus, essentially inextensible metal cords.

A second embodiment is envisioned in which this invention is incorporated within a radial ply runflat passenger tire having a fabric overlay deployed radially outward of the belt structure.

### BRIEF DESCRIPTION OF THE DRAWINGS

The structure, operation, and advantages of the invention will become further apparent upon consideration of the following description taken in conjunction with the accompanying drawings, wherein:
FIGURE 1 is a cross-sectional view of an exemplary prior art runflat tire design incorporating reinforced sidewalls;
FIGURE 2 is a cross-sectional view of a runflat tire incorporating the present invention;
FIGURE 3 is an enlarged fragmentary view of the present invention in relation to the tread and underlying belts;
FIGURE 4A is a schematic diagram showing the orientation of the reinforcement cords of the fabric underlay;
FIGURE 4B is a schematic diagram showing the angle of the reinforcing cords with respect to the equatorial plane of the tire;
FIGURE 5A is a meridional cross-sectional diagram of a prior art tire tread, wherein the tread and underlying components are shown under conditions of normal inflation;
FIGURE 5B is a meridional cross-sectional diagram of a normally inflated prior art tire tread wherein the tread and the underlying components are shown as deformed in the region where the tire contacts a flat road surface;
FIGURE 5C is a meridional cross-sectional diagram of a prior art tire tread wherein the tread and underlying components are upward buckled during uninflated runflat operation;
FIGURE 6A is a circumferential schematic cross-sectional diagram of a prior art tire wherein the tread and underlying components are shown under conditions of normal inflation;
FIGURE 6B is a circumferential schematic cross-sectional diagram of a prior art tire wherein the tread and the underlying components are shown as circumferentially deformed in the region where the tire contacts a flat road surface;
FIGURE 6C is a circumferential schematic cross-sectional diagram of a prior art tire wherein the tread and underlying components are circumferentially upward buckled during uninflated runflat operation;
FIGURE 7 is a schematic view of a structural I-beam which demonstrates the mechanical actions of the inventive concept of the present invention in contributing to the stiffening of the tread and underlying structures;
FIGURE 8A is a meridional cross-sectional view of the belts and plies and fabric overlay of a prior art runflat tire, showing the neutral bending axis and an I-beam analog of the tire structure;
FIGURE 8B is a meridional cross-sectional view of the belts and plies and fabric underlay of the runflat tire of the present invention, showing the neutral bending axis and an I-beam analog of the tire structure;
FIGURE 8C is a circumferential cross-sectional view of the belts and plies and fabric overlay of a prior art runflat tire, showing the neutral bending axis and an I-beam analog of the tire structure;
FIGURE 8D is a circumferential cross-sectional view of the belts and plies and fabric underlay of the runflat tire of the present invention, showing the neutral bending axis and an I-beam analog of the tire structure;
FIGURE 9 shows a comparison of the sidewall stress distribution in an uninflated prior art tire and a tire incorporating this invention; and
FIGURE 10 is a cross-sectional view of a second embodiment of the runflat tire of the present invention incorporating both a fabric underlay and a fabric overlay.

### DEFINITIONS

"0-degree fabric" means fabric that is reinforced with cords that are aligned with a low angle relative to the tire's equatorial plane.

"Apex" means an elastomeric filler located radially above the bead core and between the plies and the turnup ply.

"Aspect ratio" means the ratio of the tire's section width to its section height.

"Axial" and "axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Belt Structure" or "Reinforcement Belts" means at least two annular layers or plies of parallel cords, woven or unwoven, underlying the tread, unanchored to the bead, and having both left and right cord angles in the range from 17E to 27E relative to the equatorial plane of the tire.

"Breakers" or "tire breakers" means the same as belt or belt structure or reinforcement belts.

"Carcass" means the tire structure apart from the belt structure and the tread.

"Casing" means the carcass, belt structure, beads, sidewalls and all other components of the tire excepting the tread and undertread.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands of which the plies and other cord-reinforced components of the tire are comprised.

"Equatorial plane" means the plane perpendicular to the tire's axis of rotation and passing through the center of its tread; or the plane containing the circumferential centerline of the tread.

"Footprint" means the contact patch or area of contact of the tire tread with a flat surface at zero speed and under normal load and pressure.

"Green carcass" means the uncured tire carcass prior to the installation of the belt structure and tread.

"Inner liner" means the layer or layers of elastomer or other material that form the inside surface of a tubeless tire and that contain the inflating fluid within the tire.

"Insert" means the cross-sectionally crescent- or wedge-shaped reinforcement typically used to reinforce the sidewalls of runflat-type tires.

"Lateral" means a direction parallel to the axial direction.

"Meridional" refers to a direction parallel to the axial direction but, more specifically, to a laterally disposed curved line that lies in a plane that includes the axis of the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" mean directions radially toward or away from the axis of rotation of the tire.

"Radial ply structure" means the one or more carcass plies of which at least one ply has reinforcing cords oriented at an angle of between 65° and 90° with respect to the equatorial plane of the tire.

"Radial ply tire" means a belted or circumferentially-restricted pneumatic tire in which at least one ply has cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "tangentially" refer to segments of circular curves that intersect at a point through which can be drawn a single line that is mutually tangential to both circular segments.

"Tire crown" means the tread, tread shoulders and adjacent portions of the sidewalls.

"Tread contour" means the shape of a tire tread as viewed in axial cross section.

"Tread Width" means the arc length of the tread surface in the plane includes the axis of rotation of the tire.

"Wedge Insert" means the same as "Insert."

### DETAILED DESCRIPTION OF THE PREFERRED EMBODIMENT

### Prior Art Embodiment

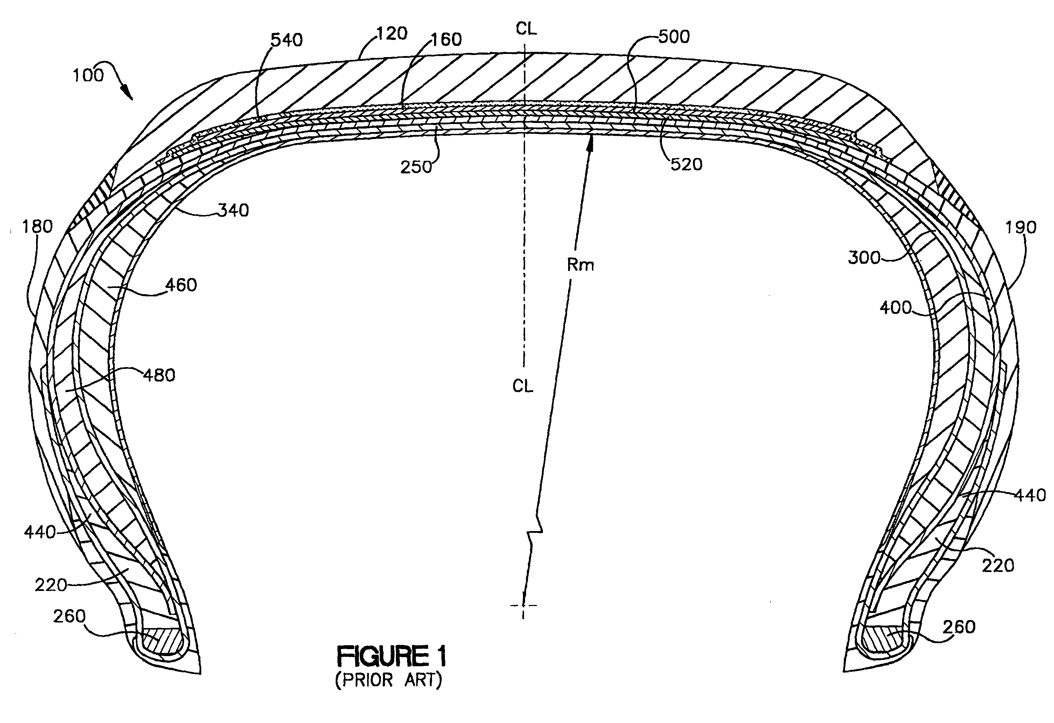

With reference to FIGURE 1, a cross section of a prior art, low-profile, pneumatic radial runflat passenger tire 100, as disclosed in U.S. Patent Application Serial No. 08/805,489, having a common assignee with the present invention, and which is incorporated in its entirety herein, is illustrated. The tire 100 has a tread 120, a belt structure 160, a pair of sidewall portions 180,190, a pair of bead regions 220 and a carcass structure 250. Belt structure 160 consists of two belts 500,520 and a fabric overlay 540 deployed between the bottom portion of tread 120 and the upper parts of the belt structure. The carcass 250 includes a first ply 300 and second ply 400, a gas-impervious liner 340, a pair of beads 260, a pair of bead filler apexes 440, a first pair of inserts 460 and a second pair of inserts 480. The first or innermost insert 460 is located between the inner liner 340 and the first ply 300, and the second insert 480 is located between the first ply 300 and second ply 400. Fabric overlay 540 is disposed beneath or radially inward of tread 120 and on top of, or radially outward from, belt structure 160. The reinforced sidewalls of carcass structure 250 gives the tire 100 a limited runflat capability.

As can be seen from FIGURE 1, the structural reinforcement in the sidewall area of the tire 100 substantially increases the overall thickness of the sidewalls 180,190. This prior art runflat tire design shows the more or less uniformly thickened sidewalls that characterize runflat tire designs. Such insert-reinforced sidewalls are necessary to support the tire's load with minimal sidewall deformation when the tire 100 is in an uninflated state. Such runflat tire designs provide reasonable vehicle handling and performance under conditions of full inflation, and they yield reasonable runflat tire life and vehicle handling when the tire is uninflated. Runflat tires generally weigh more than equivalent non-runflat-capable tires, because of the additional weight of the reinforcement material in the sidewalls; this additional weight is greater in high-profile runflat tires than in low-profile runflat tires because of the need for larger, more massive inserts in the larger sidewalls.

### Fabric Underlay

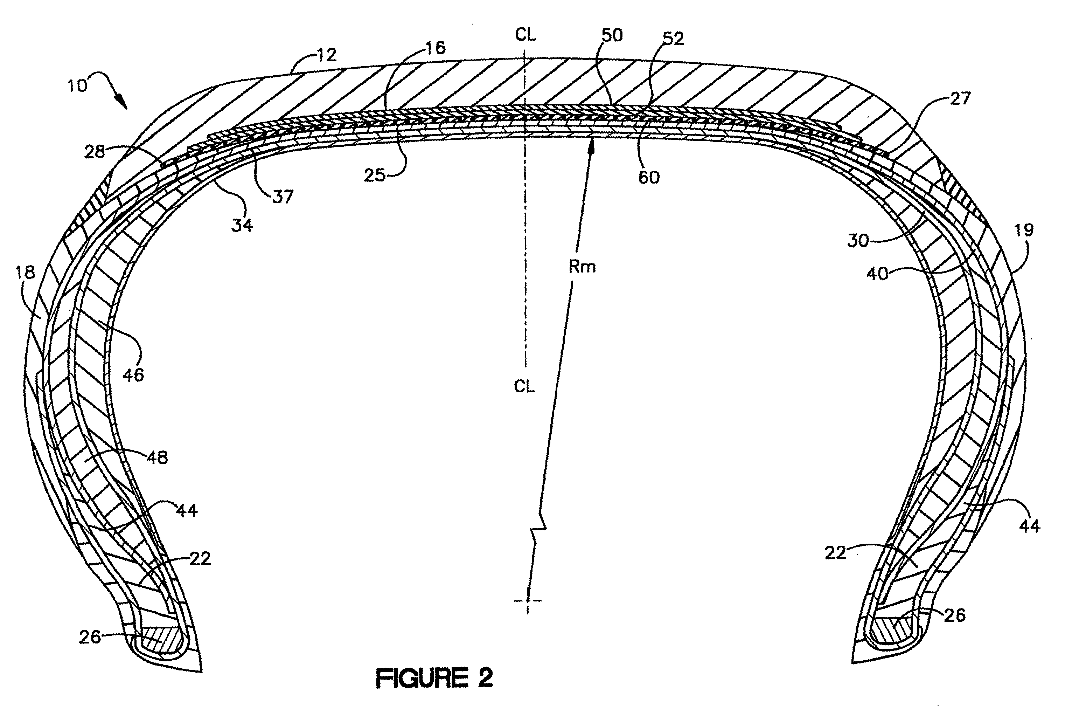

FIGURE 2 shows tire 10 according to the present invention, having the same general sidewall construction as that of prior art runflat tire designs, as shown for example in FIGURE 1. The invention consists of fabric underlay 60 deployed between the belt structure 16 and the radial ply structure 37 of carcass 25. The radial ply structure 37, while being illustrated as comprising two plies 30 and 40, can be constructed of a single ply or more than two plies in accordance with this invention. A fabric underlay 60 is the inventive feature. The fabric underlay 60 has lateral margins 27,28, which preferably lie beyond the lateral edges of the belt structure 16. While the lateral margins 27,28 preferably extend beyond the lateral edges of the belt structure 16, it is also within the terms of the invention for them to be slightly shorter than the belt structure. The fabric underlay 60 might or might not be used in concert with a fabric overlay of the sort identified as 540 shown in FIGURE 1.

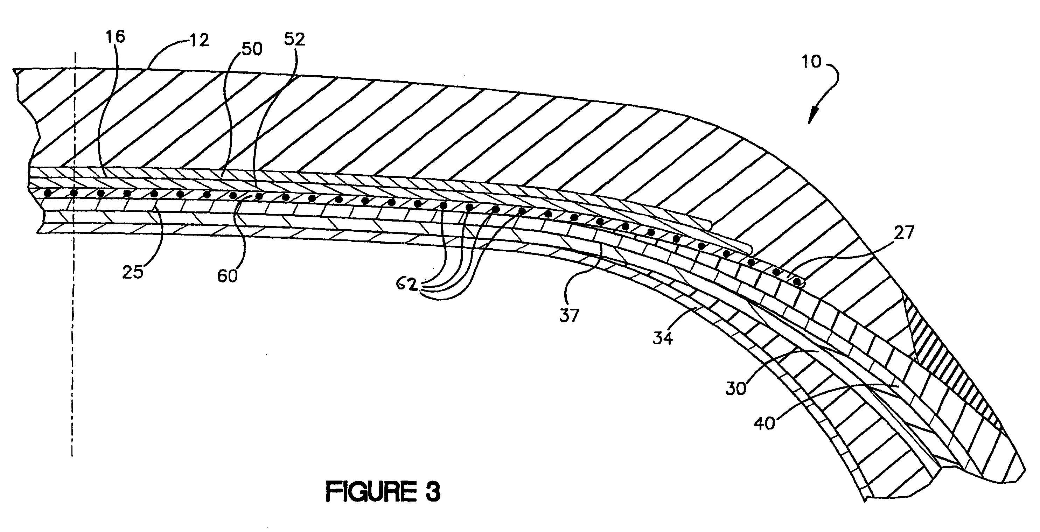

FIGURE 3 is an enlarged fragmentary view of the location of the fabric underlay 60 in relation to reinforcing belts 50,52 and carcass 25 beneath tread 12 of tire 10. The practice of the inventive concept will become evident in the description below.

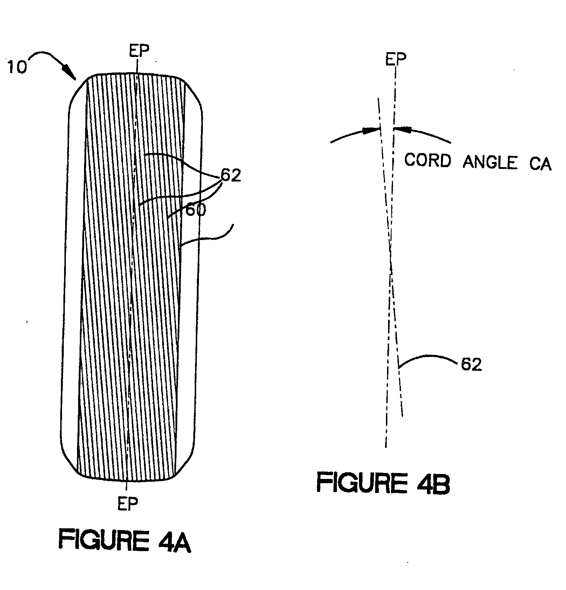

The fabric underlay 60 shown in FIGURES 2 and 3 has high-modulus fibers or cords 62 that are aligned approximately circumferentially, as shown in FIGURE 4. The width of the fabric underlay 60 is approximately equal to the width of belt structure 16, preferably slightly wider than the belt structure.

FIGURES 4A and 4B are schematic views showing the circumferential orientation of the reinforcing cords 62 of the fabric underlay 60. The tensile-stress-bearing cords 62 shown in FIGURE 4 are more or less parallel to the equatorial plane EP as viewed from a direction normal to the tread 12 (which is not shown in FIGURE 4). That is, as shown in FIGURE 4B, the reinforcing cords 62 of the fabric underlay 60 are oriented at a cord angle CA of about 0 degrees to about 30 degrees with respect to the equatorial plane EP, preferably between about 0 degrees and about 20 degrees, but most preferably about 0 degrees with respect to the equatorial plane EP of the tire 10.

Cords 62 in FIGURES 3, 4A and 4B are high-modulus synthetic or textile cords constructed from the group of materials that includes, but is not limited to polyester, nylon, rayon, aramid, glass and other rigid, high-modulus materials.

### Tread Contour and Tread Meridional and Circumferential Flexure

The operation of the invention becomes evident by considering the flexure of the tread 120 of the prior art tire 100, shown in FIGURE 1, during conditions of normal inflated operation and during runflat operation. Referring to FIGURE 1, the contour of the central portion of the inner surface of the carcass 250 of the prior art tire 100 is defined generally by a circular curve having a meridional radius of curvature R_{M}, which describes a circle whose plane coincides with that of the plane of FIGURE 1. In the case of a normally inflated tire 100, the length of R_{M}, in the non-ground-contacting portions of the tread 120 and underlying carcass structure 250, is on the order of hundreds of millimeters, often exceeding, in the central portion of low-profile tread and carcass designs, the maximum dimension of the tire itself.

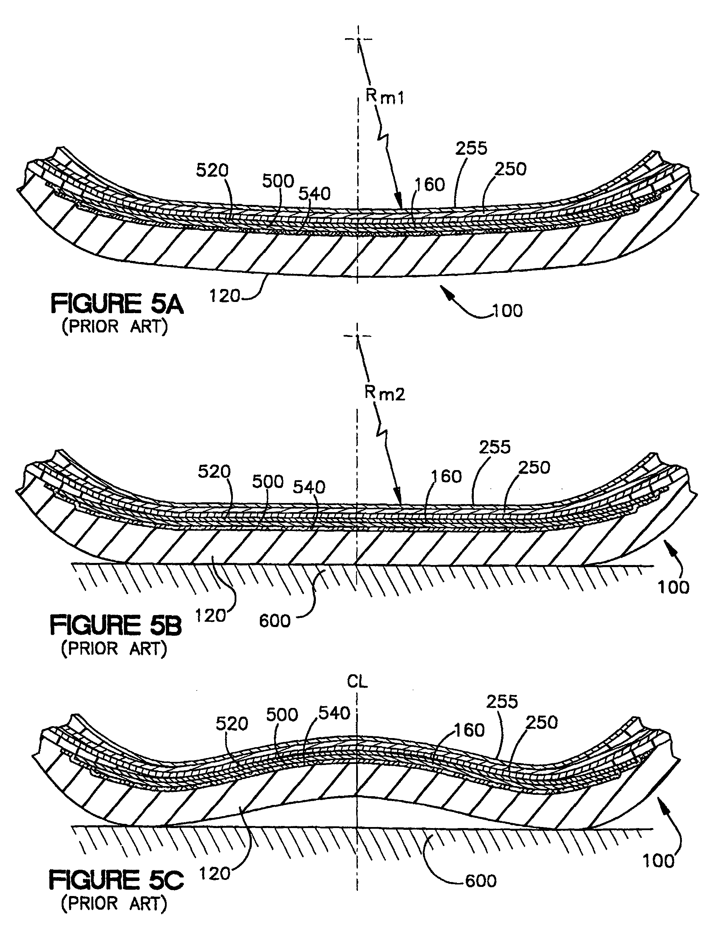

The significance of the meridional radius of curvature R_{M} becomes more specifically evident upon contemplation of FIGURES 5A, 5B and 5C, which include the stresses acting upon the prior art fabric overlay 540 are examined more closely in relation to the belts 500,520 of belt structure 160 and tread 120. FIGURE 5A shows a fragmentary schematic of the prior art tire 100 in normally inflated mode wherein tread 120 is normally inflated but not in contact with a flat road surface. The meridional contour of the inner surface 255 of the carcass 250 is defined by the same circle having a radius R_{M} as in FIGURE 1. FIGURE 5B shows a fragmentary schematic of belt structure 160 and overlay fabric 540 in that portion of a normally inflated prior art tire 100 in contact with a flat road surface 600; the correspondingly radius of curvature R_{M2} for the flattened central-most region of the tread 120 in contact with the flat road surface is unlimited in dimension, or infinite. FIGURE 5C illustrates the upward buckling of tread 120 of the prior art runflat tire 100 in an uninflated state when it contacts flat road surface 600.

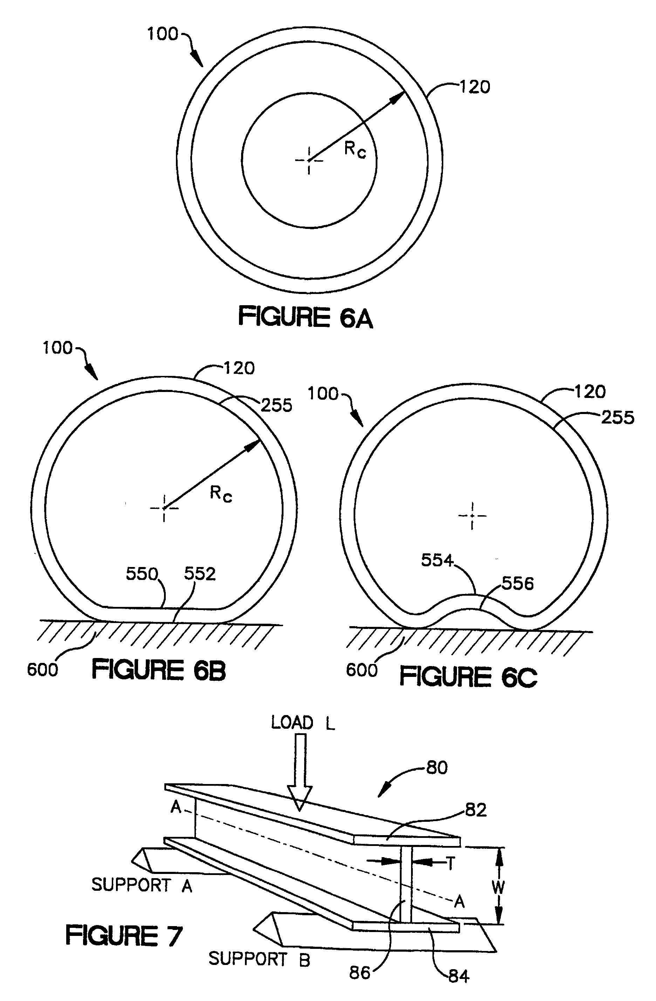

Buckling of the tread 120 of the prior art tire 100 also occurs in the circumferential direction. FIGURES 6A, 6B and 6C are schematic cross-sectional views of the prior art tire 100, in which the cross sections coincide with the equatorial plane of the tire. FIGURE 6A illustrates of a second carcass contour defining circular curve having a radius of R_{C}. For all portions of the normally inflated tire, the radius R_{C} is equal to the radius of the central-most inner surface portion 255 of the carcass 250 (which is not delineated in this schematic diagram); that is, the center of the circular curve defined by the radius R_{C} coincides with the rotational axis RA of the tire 100 in FIGURES 6A, 6B and 6C.

FIGURE 6B shows normally inflated prior art tire 100 in contact with road surface 600. The ground-contacting portion of tread 120 is denoted by the flattened region 552, radially inward of which is the flattened region 550 of the inner-most surface of carcass structure 250. The radii of curvature defining these flattened, road-contacting portions of the tire 10 are clearly of unlimited, or infinite, in length. During runflat operation, however, the tread 120 becomes distorted in a way that goes beyond simply flattening, as shown in FIGURE 6C which demonstrates the circumferential upward buckling of the ground-contacting portions of tread 120 and underlying structures of tire 100. The upward-buckled portion 554 of inner-most surface the carcass experiences an inversion of its contour defining curve; accordingly, portion 556 of tread 120 is correspondingly upward buckled in the ground-contacting region of the tread.

FIGURE 6C indicates that the fabric overlay 540 of prior art tire 100 experiences a compressive loading, to which it offers minimal compressive-load-bearing resistance. In other words, during runflat operation as illustrated in FIGURE 5C, fabric overlay 540 resides on the compressive side of the neutral bending axis of the combined structure of the belt structure 160 and the fabric overlay. FIGURE 5C reveals that the fabric overlay 540, contributes little benefit to the overall lateral or meridional rigidity of the tire's crown region.

In summary, the tread 120 and the underlying structures of the prior art tire 100 experience two modes of buckling under runflat conditions. One mode of buckling involves lateral, or meridional, buckling of the sort illustrated in FIGURES 5A through 5B, while the other mode of buckling is circumferential, as illustrated in FIGURES 6A through 6C. The present invention, which is shown as fabric underlay 60 in FIGURE 2, operates to stiffen the tread region of the tire 10 in such as way as to minimize both of these modes of buckling during runflat operation. The inventive concept thus improves the ability of runflat tire 10 to provide good handling characteristics during runflat operation and also contributes to an enhanced runflat service life of the tire as a result of decreased flexure-induced heating of the tread and sidewall regions. An additional feature of the present invention is that its tread-stiffening properties also reduce the formation of standing waves in normally inflated runflat tires when they are operated at high speed.

### Operational Dynamics of the Inventive Concept

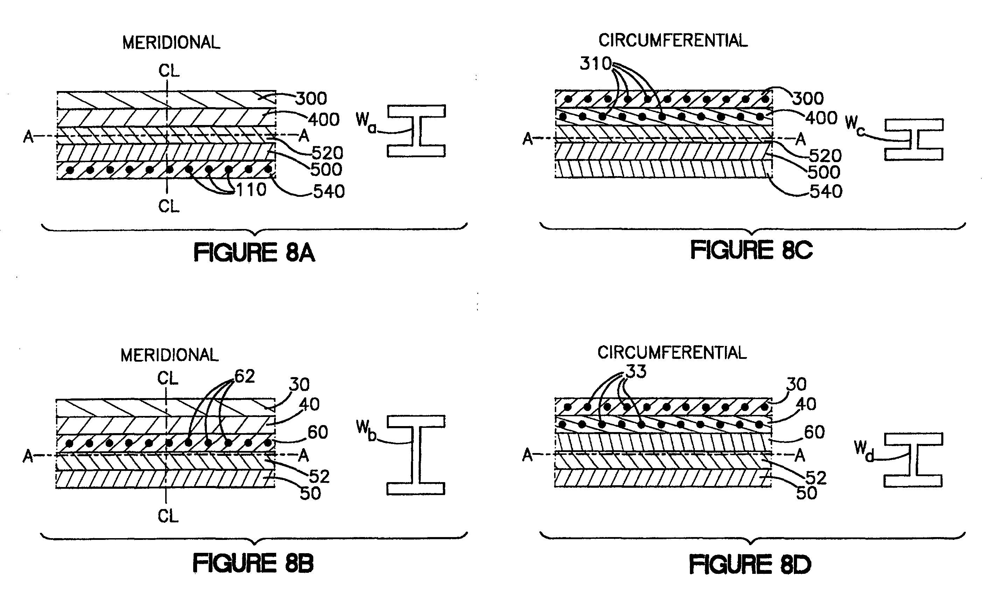

Referring to FIGURES 2, 3, 4A and 4B, the operational dynamics of the fabric underlay 60, with its circumferentially oriented reinforcing cords 62, can be understood by considering the operational concept of a structure I-beam and the associated concept of "neutral bending axis." Accordingly, FIGURE 7 illustrates the principles of an I-beam and FIGURES 8A, 8B, 8C and 8D provide a graphic basis for understanding the structural benefits of the belt structures, ply structures and fabric underlay of the present invention in relation to the prior art.

FIGURE 7 illustrates a structural I-beam 80 having a web portion 86 which separates the respective compression-bearing and tension-bearing flanges 82,84. More specifically, FIGURE 7 shows an I-beam segment 80, supported at its ends by supports A and B. I-beam 80 is shown supporting a central load L, which loads the beam 80 in such a way that the upper flange 82 is in compression, while the lower flange 84 is in tension. Assuming that the dimensions and physical properties and of flanges 82,84 are uniform and isotropic, and that the thickness of the web 86 is uniform between the flanges, then the neutral bending axis A-A will occur along the center of the I-beam 80, as shown in FIGURE 7. As the width W of web 86 increases, the bending moment of inertia of I-beam 80 increases with respect to bending under the force of load L. In other words, the rigidity of the I-beam 80, with respect to deformation under the weight of load L, increases in non-linear, direct relation to the width W of web 86, as it separates flanges 82,84.

Similarly, the respective layers of belts, plies and fabric layers in the tire of the present invention and in the prior art tire correspond in their actions to the component web 86 and flanges 82 and 84 of the I-beam shown in FIGURE 7.

FIGURES 8A, 8B, 8C and 8D show cross-sectional views of segments of the layers of the belt structures, ply structures, and, respectively, the fabric overlay and the fabric underlay of the prior art tire and the present invention. In all four FIGURES, the road-contacting tread portion is at the bottom, but is not shown. Thus, in FIGURES 8A, 8B, 8C and 8D, the stress-inducing load which corresponds to load L in FIGURE 7, acts upward from the bottom of each FIGURE. In other words, in FIGURES 8A, 8B, 8C and 8D, the bending stress derives from a force that acts from below rather than from above as in FIGURE 7, and the corresponding deflections in FIGURES 8A, 8B, 8C and 8D will be such as to bend the central portions of each FIGURE upward. Thus it follows that in each of the FIGURES 8A, 8B, 8C and 8D, the lower layers will experience compression stresses while the upper layers, above the respective neutral bending axes A-A, will experience tensile stresses.

The complexity of FIGURES 8A, 8B, 8C and 8D necessitates an detailed descriptions of what each FIGURE represents in relation to the others. Each of the four FIGURES 8A, 8B, 8C and 8D shows meridional and circumferential cross-sectional views of the two plies, two belts and fabric layers (overlay and underlay, respectively) of the prior art tire and the tire of this invention. Each FIGURE includes an equivalent I-beam cross section that illustrates the relative width of webs Wₐ, W_{b}, W_{c} and W_{d}, for the prior art tire and the tire of the present invention. The differences in the widths of webs Wₐ, W_{b}, W_{c} and W_{d}, demonstrate graphically the differences in moment of inertia, or resistance to tread bending, between the tread structures of the prior art tire and those of the present invention. In each of the FIGURES 8A, 8B, 8C and 8D, the tread cap would lie at the bottom of the view. The bending forces act so as to bend the central region of each segment upward.

FIGURE 8A shows, in meridional view, for the prior art tire 100, the belt layers and ply layers in a sequence, from top to bottom, beginning with the inner ply 300, the second ply 400, the first belt 520, the second belt 500, and the fabric overlay 540. The tread cap (not shown) lies below the fabric overlay 540. The dots in the fabric overlay 540 represent reinforcing cords 110 which, in this example, are oriented circumferentially. The bending stresses and associated deformation borne by this segment of the plies, belts and fabric overlay are of the sort demonstrated in FIGURE 5C. The neutral bending axis A-A is shown to be located in belt 520. The region below the neutral bending axis A-A experiences compressive stresses, while the region above the neutral bending axis A-A experience tensile stresses. Thus, in FIGURE 8A, the two plies 300,400, with their respective reinforcing cords (not shown) experience tensile stresses which the plies are thus able to resist because of the radial orientation of the reinforcing cords. Correspondingly, a portion of the belt layer 520 and the entirety of the belt layer 500, as well as the fabric overlay 540 experience compressive stresses. Those skilled in the art should recognize that the fabric overlay 540 would contribute little if any resistance to the applied compressive loading associated with upward buckling of the central portion of the tread.

FIGURE 8B, like FIGURE 8A, is a meridional view (i.e., having equivalent orientation to that shown in FIGURE 2). FIGURE 8B contrasts the benefits conferred by the locational deployment of fabric underlay 60 of the present invention to the locational deployment of the fabric layer 540 in FIGURE 8A. The fabric underlay 60 separates the neutral respective tensile- and compression-stress bearing elements above and below the neutral bending axis A-A. In other words, the insertion of fabric underlay 60 between the plies 30,40 and the belts 50,52 corresponds to an increase in the web width W_{b} of the structural I-beam analog. More specifically, in FIGURE 8B, the reinforcing cords 62 in the fabric underlay 60 do not influence the stiffening of the tread; rather, it is the thickness of the fabric underlay 60 that is the operative element whose benefit to the enhancement of the lateral or meridional rigidity arises from the separating effect which the fabric underlay has in relation to the respective tensile- and compressive-stress-bearing plies 30,40 and belts 50,52. With respect to the I-beam analogy, the web width W_{b} is much greater than the corresponding web width Wₐ of the prior art tire, which means that the corresponding meridional bending moment of inertia of the structure of the present invention is much greater than that of the prior art tire.

Thus FIGURES 8A and 8B demonstrate the meridional or lateral tread stiffening properties of the invention's structure in relation to that of the prior art.

FIGURES 8C and 8D illustrate the corresponding circumferential bending moments of inertia for, respectively, the prior art tire and the tire of the present invention. For the sake of clarity in understanding the orientation of the views in FIGURES 8C and 8D, the respective views correspond to the one shown in FIGURE 6C.

FIGURE 8C shows, in circumferential view, the prior art tire's belt layers and ply layers in a sequence, from top to bottom, beginning with the inner ply 300, the second ply 400, the first belt 520, the second belt 500, and the fabric overlay 540. The tread cap (not shown) lies below the fabric overlay 540. The dots in the two ply layers 300,400 represent the radially oriented reinforcing cords 310 of the two plies. The bending stresses and associated deformation borne by this segmented view of the plies, belts and fabric overlay are of the sort demonstrated in FIGURE 6C. In FIGURE 8C, the neutral bending axis A-A is shown to be located in belt 520, close to the interface of the belt 520 with belt 500. The region below the neutral bending axis A-A experiences compressive stresses, while the region above the neutral bending axis A-A experience tensile stresses. Thus, in reference to FIGURE 8C, the two plies 300,400, and the main part of the belt 520 experience tensile stresses which the respective radially oriented reinforcing cords 310 are not able to contribute any substantial resistance. Correspondingly, a portion of the belt layer 520 and the entirety of the belt layer 500, as well as the fabric overlay 540 experience compressive stresses. Those skilled in the art should recognize that the fabric overlay 540, with its circumferentially oriented reinforces cords (not shown in this view), contributes little if any resistance to the applied compressive loading associated with upward buckling of the central portion of the tread.

FIGURE 8D, like FIGURE 8B, is a circumferential view (i.e., having equivalent orientation to that shown in FIGURES 6A, 6B and 6C). FIGURE 8D contrasts the benefits conferred by the locational deployment of fabric underlay 60 of the present invention to the locational deployment of the fabric layer 540 in FIGURE 8C. The fabric underlay 60 separates the neutral respective tensile- and compression-stress bearing elements above and below the neutral bending axis A-A. In other words, in FIGURE 8D, the insertion of the fabric underlay 60 between the plies 30,40 and the belts 50,52 corresponds to an increase in the web width W_{d} of the structural I-beam analog. More specifically, in FIGURE 8D, the reinforcing cords 62 (not shown in FIGURE 8D, since the cords are circumferentially oriented) of the fabric underlay 60 contribute somewhat to the tensile-stress-bearing characteristics of the plies 30,60 that lie above the neutral bending axis A-A; in other words, the circumferentially oriented reinforcing cords 62 (not shown) of the fabric underlay 60 are able to withstand some of the tensile stresses associated with being in the tensile-stress region above the neutral bending axis, but the tensile-stress-bearing mechanical advantage of the reinforcing cords 62 in the fabric underlay is lessened somewhat because of the close proximity which the reinforcing cords have to the neutral bending axis. With respect to the I-beam analogy, the web width W_{d} is much greater than the corresponding web width W_{c} of the prior art tire, which means that the corresponding circumferential bending moment of inertia of the structure of the present invention is much greater than that of the prior art tire.

### Prestressing of Circumferential Cords of Fabric Underlay

The circumferential tread stiffening benefits of the circumferentially oriented reinforcing cords 62 of the fabric underlay 60 (as shown in FIGURE 4A) derive from the manufacturing process during which the fabric overlay is deployed upon the tire in such a way that causes the reinforcing cords to be prestressed in tension. Referring to FIGURE 8D, the tensile-prestressed cords (not shown) in the fabric underlay 60, by virtue of being prestressed in tension, are more readily able to resist the additional tensile stresses associated with the sort of upward buckling of the tread 12 as such buckling is shown in FIGURE 6C.

Accordingly, the means by which the fabric underlay 60 is deployed during manufacturing must be examined in order to best understand the additional benefits of the fabric underlay 60 -- i.e., the additional benefits beyond those of simply separating the respective tensile- and compression-stress-bearing structures that underlie the tread 12, which separation effect increases the structural moment of inertia of the combination of the respective tensile- and compression-stress-bearing structural components which contribute to the circumferential and meridional rigidity of the tread 12 of the tire 10.

### Construction of the Tire

Referring to FIGURES 2 and 4A, respectively, the location of the fabric underlay 60 and the orientation of the reinforcing cords 62, with respect to the equatorial plane EP of the tire 10 are apparent. The reinforcing cords 62 are oriented close to parallel with respect to the equatorial plane EP of the tire 10. More specifically, the angle CA that is a function of the method by which the fabric underlay 60 is applied upon the carcass, as described in detail below.

The fabric underlay 60 is applied upon the green carcass after the blow-up process on a conventional tire building drum as is well known in the art. That is, the fabric underlay is applied to the green carcass after the carcass is initially blown up but prior to being "blown-up" into the belt and tread.

The fabric underlay 60 is installed by helically or spirally winding a ribbon of cord-reinforced, uncured rubber around the initially blown-up, green carcass. The reinforcing cords 62 are disposed at an angle of between 0 degrees and 5 degrees with respect to the equatorial plane EP. The ribbon can be laid "lap" or "butt," which means that laterally adjacent portions of the ribbon can overlap or not, respectively. Normally the construction is butt in order to have uniform reinforcement and also to avoid the trapping of air under the overlapping layers of rubber.

A further blow-up of the completed green tire takes place in the curing mold. This final blow-up, which has an amplitude of about 2 percent of the tire's diameter, provides the required pretension or prestressing of the reinforcing cords 62 of the final fabric overlay 60.

### Dynamic Operation of Preferred Embodiment

The pretensioning of the reinforcing cords 62 of the fabric underlay 60 provides a circumferential tread stiffening effect -- in addition to the meridional and circumferential bending-moment-of-inertia effects described above by reference to FIGURES 8A, 8B, 8C and 8D -- which can be understood by contemplation of FIGURES 6A, 6B and 8D.

FIGURE 6A shows, in schematic form, the prior art tire 100, wherein the circumferential contour of the inner part of the inflated carcass is defined by a circular curve having a radius R_{C}. FIGURE 6B shows the ground contacting portion of the same tire 100, wherein the effective radius of the circular curve that defines the ground-contacting flattened contour of the inner carcass surface becomes extremely large, as the carcass portion underlying the tread 120 flattens upon the road surface. This same flattening effect in the ground-contacting portion of the prior art tire also happens in the tire of the present invention. FIGURE 8D, which is a circumferential cross-sectional view of the plies and belts and fabric underlay 60 of tire 10 of the present invention, shows the effect that ground-contact flattening has upon the fabric underlay 60 of the present invention. The structural components of the tire 10 which lie above the neutral bending axis A-A in FIGURE 8D experience increased tensile stresses when the tread 12 (not shown in FIGURE 8D) of a normally inflated tire of the present invention flattens upon contact with the road surface. (Structural elements below the neutral axis A-A experience compressive stresses.) In FIGURE 8D, the reinforcing fibers 62 (which are visible in FIGURE 8B, which is the corresponding meridional view of the same section), being located above the neutral axis A-A, and also being prestresses, or pretensioned, therefore can be seen by those skilled in the art to undergo an increased tensile loading in the region adjacent to that portion of the tire 10 which deforms into a flattened state due to road contact. In other words, the pretensioned reinforcing cords 62 experience additional tension, which is circumferentially oriented, in the ground-contacting portions of the normally inflated tire 10.

One benefit that derives from this additional circumferentially oriented tensioning effect of the reinforcing cords 62 of the fabric underlay 60 of the tire 10 of the present invention, is an increased circumferential rigidity of the overall tread structure, i.e., the tread 12 and the underlying belts 50,52, the fabric underlay 60, and the plies 30,40. More specifically, this additional stiffening of the tread increases the natural resonance frequency of the tread structure beyond that of the cyclical flexure frequency associated with high-speed driving, the net effect being that the tendency for standing waves to form at high speed in the normally inflated tire is dramatically reduced. In other words, the additional circumferential stiffening of the tread tends to impede or inhibit the formation of standing waves in the normally inflated tire when it is operated at high speed.

A second benefit of the pretensioned cords 62 of the fabric underlay 60 is seen during runflat operation. FIGURE 6C schematically illustrates the kind of circumferential tread buckling that can take place in an uninflated runflat tire. The present invention, however, because of its circumferential tread-stiffening effect, also impedes this kind of circumferential tread lift during runflat operation. The result is that during runflat operation, the tire of the present invention provides improved vehicle handling as well as decreased cyclical flexural amplitudes of the sort that can induce heating that can otherwise lead to a shortened runflat operational life of the tire.

### Analytical and Empirical Test Results

Computer analysis, by means of a program called ATEMATRX, developed by the inventor and coworkers, showed that the invention's contribution to flexural rigidity of a tire's tread region can be treated in a way that is analogous to that of a structural I-beam, as described above, in which the tread-region rigidity is defined as E*I where "E" is the Young's modulus of the beam and "I" is the moment of inertia of the beam around its neutral bending axis. In the case of a tire, "E" and "I" were computed for each layer of belt and fabric. The circumferential bending stiffness of the crown of the prior art tire 100, in which the fabric overlay 540 (FIGURE 1), is located radially outward of the belts 500,520 was computed to be 22,200 Newton-millimeters (N*mm) (which assumed that the compression modulus of the fabric overlay cord was equal to that of rubber). However, in the case of this invention, wherein the fabric underlay 60 (FIGURE 2) was located radially inward of the belts 50,52, the circumferential rigidity was computed to be 27,800 N*mm, corresponding to a rigidity increase of 25 percent over that of the prior art tire. On the other hand, the meridional bending stiffness of the prior art tire was computed to be 2,900 N*mm, while that of the invention was computed to be 4,900 N*mm, corresponding to an increase of 70 percent.

Furthermore, it was also demonstrated by the inventor, through finite element analysis and a test on a 195/70R14 experimental tire, that when the flexural rigidity of a tire crown is increased according to this invention, the stresses generated by the tire deflection are better distributed around the tire's circumference. Specifically, the above mentioned test was performed in comparison with a 195/60R15 "V" speed rated tire that did not incorporate this invention, thereby demonstrating that increased circumferential rigidity of the tread operates to distribute the uninflated tire's load more evenly to, and over a larger region of, the reinforced sidewalls 18,19.

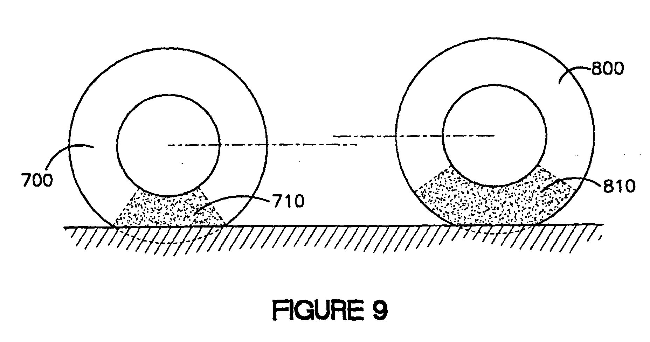

FIGURE 9 is a schematic comparison of sidewall load distribution in a prior art runflat tire 700 and a tire 800 incorporating this invention. The tire 800 incorporating this invention distributes the tire's runflat load to a larger region 810 of the sidewall during runflat operation, compared to the corresponding region 710 of the sidewall of prior art tire 700. Tire 800, incorporating this invention, thus has a higher stance during runflat conditions than does the corresponding prior art tire 700. The result is improved runflat handling performance and a generally better runflat durability of the tire 800 incorporating this invention. Additionally, the distribution of the tire's load over a larger area of the portions of the sidewalls 810 adjacent to the ground contacting portion of the tread results in decreased compressive loading and flexure of the sidewalls, leading to less heat buildup and thus to longer runflat service life.

In addition to improved runflat durability, a runflat tire incorporating this inventive concept also have improved properties at normal-inflation pressure. During high-speed operation under normal inflation pressure, the tire's handling and durability are improved due to the tendency of the increased circumferential rigidity of the tread to damp out or otherwise retard the formation of standing waves in the tread and adjacent sidewall areas.

Test trials showed that the high-speed capacity of a runflat tire incorporating this invention is at least as good as that of a tire with fabric overlay located radially outward of the belt structure. Fabric overlay 540 (FIGURE 1) can be also incorporated in the improved runflat tire design of this invention, even though such prior art fabric overlays offer little or no improvement to lateral or circumferential rigidity of the tread, especially with respect to upward buckling of the central portion of the tread during runflat operation. The inventors recognize, however, that a steel-fabric overlay would, however, offer resistance to compression, and thus would add to the tread's circumferential bending rigidity.

Worth noting in connection with this invention is U.S. Patent 4,262,726 ('726), "Radial Tire with Low Angle Carcass Overlay Ply," which bears a superficial appearance to this present invention. The "Overlay Ply" in the '726 patent corresponds to underlay 60 (FIGURE 2) of the present invention only in terms of the locational relationship of that Overlay Ply to the adjacent tire components. The term "Low Angle" in the title of the '726 patent refers to the angle of the reinforcing cords of the "Overlay Ply" relative to the equatorial plane. In other words, both the present invention and the one covered by U.S. Patent 4,262,726 have a superficial resemblance in that Patent 4,262,726 and the present invention both describe a reinforced fabric layer that is deployed radially inward of the belt structures. However, the two inventions are substantially different in that in this invention the fabric underlay is applied to the tire after the blow-up portion of the manufacturing operation rather than, as in '726, prior to blow-up; i.e., the circumferentially oriented reinforcing cords of the fabric underlay of '726 are designed such as to be helical prior to blow-up, after which the helical reinforcing cords become fully extended, and thereafter inextensible. Furthermore, the invention of US-A- 4,262,726 is applicable to the fabrication of non-runflat tires and therefore was not intended to offer any of the runflat benefits of the present invention.

### EMBODIMENT ONE

Referring to FIGURE 2, there is illustrated a first embodiment of the invention incorporating a runflat radial ply tire 10 as described in the above specification but having one of its radial plies 30,40 reinforced with essentially inextensible fibers or cords made of metal such as steel, as disclosed in WO 98/54013, published on 3.12.1998 and in which the aspect ratio of the tire can be between the maximum and minimum values of aspect ratios, i.e. between 30 percent and 80 percent for runflat passenger tires. Such an embodiment would have potential for runflat use in high-performance sports type vehicles or light trucks.

### EMBODIMENT TWO

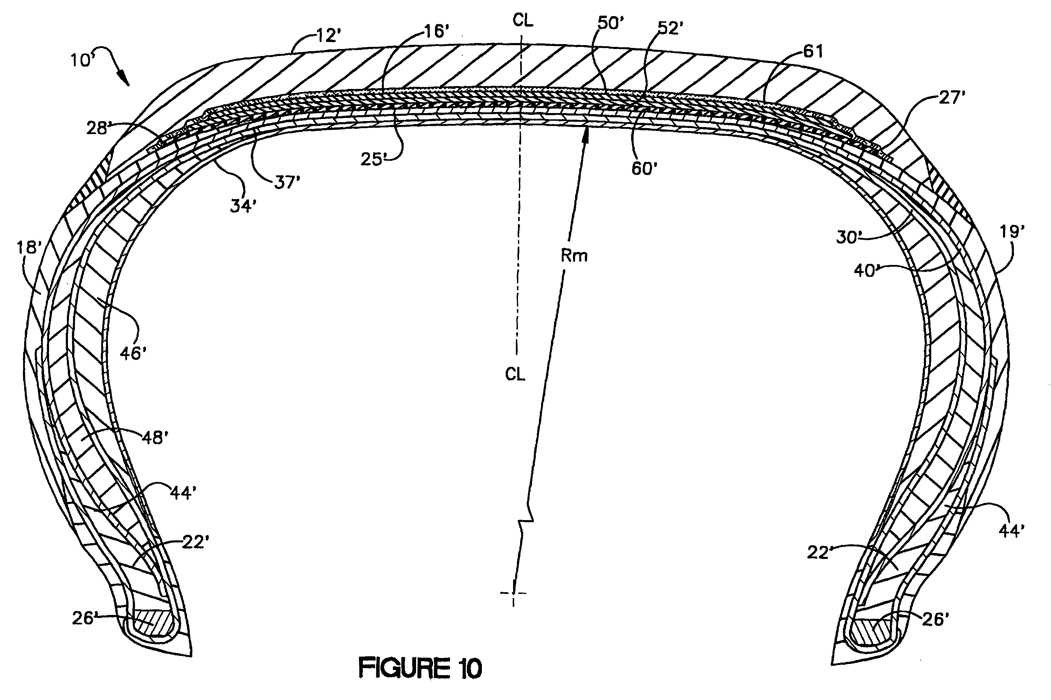

A second embodiment, as shown in FIGURE 10, of this invention is incorporated within a radial ply runflat passenger tire having a fabric overlay 500 deployed radially outward of the belt structure 37 in combination with the underlay 60 which functions as described above with reference to FIGURE 2.

## Claims

1. A pneumatic radial ply runflat tire (10) having a tread (12), a carcass (25) with two sidewalls (18,19) and two inextensible annular beads (26) and a radial ply structure (37) of one or more radial plies (30,40) and one or more inserts (46, 48) reinforcing said sidewalls (18, 19), and a belt structure (16) located between the tread (12) and the radial ply structure (37), the runflat tire (10) having a fabric underlay (60) containing high-modulus reinforcing cords (62), deployed between the belt structure (16) and the radial ply structure (37) for supporting tensile loads during both normal-inflated and runflat operating conditions, the tire (10) **characterized by** the cords (62) of the fabric underlay (60) being aligned at an angle (CA) of 0 degrees to 8 degrees with respect to the equatorial plane (EP) of the tire (10).

2. The tire (10) of claim 1 in which the fabric underlay (60) has opposing marginal edges (27,28) which extend laterally beyond lateral edges of the belt structure (16).

3. The tire (10) of claim 1 in which the high-modulus reinforcing cords (62) of the fabric underlay (60) are made of high-modulus material selected from the group consisting essentially of polyester, nylon, rayon, aramid and glass.

4. The tire (10) of claim 1 in which the fabric underlay (60) is located on the tensile side of the neutral bending axis of the combined belt structure (16), fabric underlay (60) and ply structure (37).

5. The tire (10) of claim 1 in which the reinforcing cords (62) of the fabric underlay (60) are oriented at an angle of between 0 degrees and 5 degrees, with respect to the equatorial plane (EP) of the tire.

6. The tire (10) of claim 1 in which the reinforcing cords (62) of the fabric underlay (60) are oriented at an angle of about 0 degrees with respect to the equatorial plane (EP) of the tire.

7. The tire (10) of claim 1 in which a fabric overlay (540) is disposed between the belt structure (16) and the tread (12).

8. A method of constructing a radial ply runflat tire (10) by the steps of:
a) forming an initially blown-up green tire carcass (25);
b) circumferentially wrapping a ribbon of cord-reinforced elastomeric material upon the initially blown-up green tire carcass (25) to form a fabric underlay (60) so that the reinforcing cords (62) are oriented at an angle (CA) of 0 degrees to 5 degrees with respect to the equatorial plane (EP) of the initially blown-up green carcass (25);
c) further blowing up the green tire carcass (25) with the wrapped fabric underlay (60) to engage a belt structure (16) and a tread (12) to form a completed green tire; and
d) finally blowing up the completed green tire in a curing mold to prestress the reinforcing cords (62) of the fabric underlay (60).

9. The method of claim 8 including the step of circumferentially winding the ribbon of cord-reinforced elastomeric material about the blown-up carcass such that the edges of the ribbon overlap.

10. The method of claim 8 including the step of circumferentially winding the edges of the ribbon of cord reinforced elastomeric material about the blown-up carcass such that the edges of the ribbon meet without overlapping.

## Patentansprüche

1. Notlauf-Radialluftreifen (10) mit einem Laufstreifen (12), einer Karkasse (25) mit zwei Seitenwänden (18, 19) und zwei nicht dehnbaren ringförmigen Wülsten (26) und einem Radiallagenaufbau (37) aus einer oder mehreren radialen Lagen (30, 40) und einem oder mehreren Einsätzen (46, 48), die die Seitenwände (18, 19) verstärken, und einen Gürtelaufbau (16), der zwischen dem Laufstreifen (12) und dem Radiallagenaufbau (37) angeordnet ist, wobei der Notlauf-Reifen (10) eine Gewebeunterlage (60) aufweist, die Hochmodul-Verstärkungskorde (62) enthält und zwischen den Gürtelaufbau (16) und dem Radiallagenaufbau (37) entfaltet ist, um Zuglasten sowohl bei normal aufgepumpten Betriebsbedingungen als auch bei Notlauf-Betriebsbedingungen zu tragen, wobei der Reifen (10) **dadurch gekennzeichnet ist, dass** die Korde (62) der Gewebeunterlage (60) unter einem Winkel (CA) von 0° bis 8° in Bezug auf die Äquatorialebene (EP) des Reifens (10) ausgerichtet sind.

2. Reifen (10) nach Anspruch 1,
bei dem die Gewebeunterlage (60) entgegengesetzte Begrenzungskanten (27, 28) aufweist, die sich seitlich über Seitenkanten des Gürtelaufbaus (16) hinaus erstrecken.

3. Reifen (10) nach Anspruch 1,
bei dem die Hochmodulverstärkungskorde (62) der Gewebeunterlage (60) aus Hochmodul-Material hergestellt sind, das aus der Gruppe ausgewählt ist, die im Wesentlichen aus Polyester, Nylon, Rayon, Aramid und Glas besteht.

4. Reifen (10) nach Anspruch1,
bei dem die Gewebeunterlage (60) auf der Zugseite der neutralen Biegeachse der kombinierten Gürtelaufbau (16), Gewebeunterlage (60) und Lagenaufbau (37) angeordnet ist.

5. Reifen (10) nach Anspruch 1,
bei dem die Verstärkungskorde (62) der Gewebeunterlage (60) unter einem Winkel zwischen 0° und 5° in Bezug auf die Äquatorialebene (EP) des Reifens orientiert sind.

6. Reifen (10) nach Anspruch 1,
bei dem die Verstärkungskorde (62) der Gewebeunterlage (60) unter einem Winkel von ungefähr 0° in Bezug auf die Äquatorialebene (EP) des Reifens orientiert sind.

7. Reifen (10) nach Anspruch 1,
bei dem die Gewebeauflage (540) zwischen dem Gürtelaufbau (16) und dem Laufstreifen (12) angeordnet ist.

8. Verfahren zum Aufbauen eines Notlauf-Radialreifens (10) mit den Schritten, dass:
a) eine anfänglich aufgeblasene Rohreifenkarkasse (25) gebildet wird;
b) ein Band aus kordverstärktem Elastomermaterial auf die anfänglich aufgeblasene Rohreifenkarkasse (25) in Umfangsrichtung gewickelt wird, um eine Gewebeunterlage (60) zu bilden, so dass die Verstärkungskorde (62) unter einem Winkel (CA) von 0° bis 5° in Bezug auf die Äquatorialebene (EP) der anfänglich aufgeblasenen Rohkarkasse (25) orientiert sind;
c) ferner die Rohreifenkarkasse (25) mit der gewickelten Gewebeunterlage (60) aufgeblasen wird, um einen Gürtelaufbau (16) und einen Laufstreifen (12) in Eingriff zu bringen und somit einen fertig gestellten Rohreifen zu bilden; und
d) der fertig gestellte Rohreifen in einer Vulkanisierform abschließend aufgeblasen wird, um die Verstärkungskorde (62) der Gewebeunterlage (60) vorzuspannen.

9. Verfahren nach Anspruch 8,
das den Schritt umfasst, dass das Band aus kordverstärktem Elastomermaterial in Umfangsrichtung um die aufgeblasene Karkasse herumgewickelt wird, so dass die Kanten des Bandes sich überlappen.

10. Verfahren nach Anspruch 8,
das den Schritt umfasst, dass die Kanten des Bandes aus kordverstärktem Elastomermaterial in Umfangsrichtung um die aufgeblasene Karkasse herumgewickelt werden, so dass die Kanten des Bandes sich ohne Überlappung treffen.

## Revendications

1. Bandage pneumatique (10) à nappe radiale permettant de rouler à plat possédant une bande de roulement (12), une carcasse (25) comportant deux flancs (18, 19), deux talons annulaires inextensibles (26), une structure de nappes radiales (37) constituée par une ou plusieurs nappes radiales (30, 40), une ou plusieurs pièces rapportées (46, 48) renforçant lesdits flancs (18, 19), et une structure de ceintures (16) située entre la bande de roulement (12) et la structure de nappes radiales (37), le bandage pneumatique (10) comportant une couche sous-jacente de tissu (60) contenant des câblés de renforcement (62) à module élevé, déployée entre la structure de ceintures (16) et la structure de nappes radiales (37) pour supporter des charges de traction dans des conditions de travail à la fois à l'état normalement gonflé et lorsque le bandage pneumatique roule à plat, le bandage pneumatique (10) étant **caractérisé par le fait que** les câblés (62) de la couche sous-jacente de tissu (60) sont disposés en alignement en formant un angle (CA) de 0 degrés à 8 degrés par rapport au plan équatorial (EP) du bandage pneumatique (10).

2. Bandage pneumatique (10) selon la revendication 1, dans lequel la couche sous-jacente en tissu (60) possède des bords marginaux opposés (27, 28) qui s'étendent en direction latérale au-delà des bords latéraux de la structure de ceintures (16).

3. Bandage pneumatique (10) selon la revendication 1, dans lequel les câblés de renforcement à module élevé (62) de la couche sous-jacente en tissu (60) sont réalisés en un matériau à module élevé choisi parmi le groupe constitué essentiellement par le polyester, le Nylon, la rayonne, l'aramide et le verre.

4. Bandage pneumatique (10) selon la revendication 1, dans lequel la couche sous-jacente en tissu (60) est disposée sur le côté exposé aux tractions de l'axe de flexion neutre de la combinaison de la structure de ceintures (16), de la couche sous-jacente en tissu (60) et de la structure de nappes (37).

5. Bandage pneumatique (10) selon la revendication 1, dans lequel les câblés de renforcement (62) de la couche sous-jacente en tissu (60) sont orientés en formant un angle entre 0 degré et 5 degrés par rapport au plan équatorial (EP) du bandage pneumatique.

6. Bandage pneumatique (10) selon la revendication 1, dans lequel les câblés de renforcement (62) de la couche sous-jacente en tissu (60) sont orientées en formant un angle d'environ 0 degré par rapport au plan équatorial (EP) du bandage pneumatique.

7. Bandage pneumatique (10) selon la revendication 1, dans lequel une couche de recouvrement en tissu (540) est disposée entre la structure de ceintures (16) et la bande de roulement (12).

8. Procédé de construction d'un bandage pneumatique à nappe radiale (10) permettant de rouler à plat, en passant par les étapes consistant à :
a) former une carcasse de bandage pneumatique (25) à l'état non vulcanisé qui a été soumise à un soufflage initial ;
b) envelopper en direction circonférentielle à l'aide d'un ruban constitué d'une matière élastomère renforcée avec des câblés la carcasse de bandage pneumatique (25) à l'état non vulcanisé qui a été soumise à un soufflage initial pour former une couche sous-jacente en tissu 60 de telle sorte que les câblés de renforcement 62 sont orientés en formant un angle (CA) de 0 degrés à 5 degrés par rapport au plan équatorial (EP) de la carcasse (25) à l'état non vulcanisé qui a été soumise à un soufflage initial ;
c) soumettre à un soufflage ultérieur la carcasse de bandage pneumatique (25) à l'état non vulcanisé qu'enveloppe la couche sous-jacente en tissu (60) pour entrer en contact avec la structure de ceintures (16) et la bande de roulement (12) afin de former un bandage pneumatique terminé à l'état non vulcanisé ; et
d) soumettre à un soufflage final le bandage pneumatique terminé à l'état non vulcanisé dans un moule de vulcanisation pour mettre en état de précontrainte les câblés de renforcement (62) de la couche sous-jacente en tissu (60).

9. Procédé selon la revendication 8 englobant l'étape consistant à enrouler en position circonférentielle le ruban constitué d'une matière élastomère renforcée avec des câblés autour de la carcasse soumise à un soufflage de telle sorte que les bords du ruban se chevauchent.

10. Procédé selon la revendication 8 englobant l'étape consistant à enrouler en position circonférentielle les bords du ruban de la matière élastomère renforcée avec des câblés autour de la carcasse soumise à un soufflage de telle sorte que les bords du ruban se rencontrent sans se chevaucher.
